# EUROPÄISCHE PATENTSCHRIFT

(11) **EP 0 588 018 B1**
(45) Veröffentlichungstag und Bekanntmachung des Hinweises auf die Patenterteilung: **14.01.1998**
(21) Anmeldenummer: 93111566.1
(22) Anmeldetag: 20.07.1993
(51) Int. Cl.: B23D 61/02, B23D 61/06

(54) **Mit Segmentplatten bestücktes Kreissägeblatt**
Circular saw blade provided with segments
Lame de scie circulaire munie des segments

(30) Priorität: 13.08.1992 DE 4226729; 18.03.1993 DE 4308596
(43) Veröffentlichungstag der Anmeldung: 23.03.1994
(73) Patentinhaber: SANDVIK AKTIEBOLAG, 811 81 Sandviken (SE)
(72) Erfinder: Stoffels, Karl-Heinz, D-40667 Meerbusch (DE)
(74) Vertreter: Weber, Dieter, Dr.

(56) Entgegenhaltungen:
- EP-A- 0 095 062
- EP-A- 0 242 343
- AT-B- 237 998
- AT-B- 383 533
- CH-A- 343 207
- DE-C- 507 472
- DE-C- 556 441
- FR-A- 2 249 736
- GB-A- 101 031
- GB-A- 613 495
- US-A- 1 707 903
- US-A- 4 043 367
- US-A- 4 563 929

## Beschreibung

Die vorliegende Erfindung betrifft ein mit Segmentplatten bestücktes Kreissägeblatt, bestehend aus einer im wesentlichen kreisförmigen Scheibe, wobei die Scheibe entlang ihres äußeren Umfanges eine vom zentralen Scheibenteil abgesetzte, dünnere Ringzone aufweist, und mit entlang dieser Ringzone der Scheibe befestigbaren Segmentplatten, mit Schlitzen quer zur Ebene der Segmentplatte, die mindestens eine Aufnahme für eine Wechselplatte aus Hartmetall definieren, wobei der Aufnahmeschlitz zwei im Abstand einander gegenüberliegende Wände aufweist, von denen eine an einem im wesentlichen starren Teil der Segmentplatte vorgesehen ist, und wobei ein Klemmkeil für die Aufnahme in einem Schlitz vorgesehen ist.

Ein Kreissägeblatt der vorstehend genannten Art ist aus der FR-A-2 249 736 bekannt. Auch aus dem deutschen Patent Nr. 556,441 ist ein mit Segmentplatten bestücktes Kreissägeblatt bekannt. bekannt.

Im Falle des zuletzt genannten deutschen Patentes Nr. 556,441 sind die Segmente für das Kreissägeblatt kurze Ringabschnitte, die mit einem radial inneren Teil mit einer zentralen Kreissägescheibe verschraubt werden und die im radial äußeren Teil sich im wesentlichen radial erstreckende Schlitze aufweisen, in welche Schneideinsätze aus Schneidstahl eingelötet oder eingeschweißt sind. Die radial äußere Kante der betreffenden Segmente ist in Form von Zahnflanken ausgebildet, welche sich dem Verlauf der Spanflächen und Freiflächen der in die Schlitze eingesetzten Schneideinsätze mehr oder weniger anpassen.

Bei diesem Stand der Technik geht man davon aus, daß die Schneideinsätze in die betreffenden Schlitze eingelötet oder in diesen Schlitzen verschweißt werden müssen, um sie ausreichend zu befestigen. Beim direkten Anbringen von Schneideinsätzen an sehr großen Kressägeblättern taucht dann allerdings die Gefahr auf, daß durch die dabei auftretenden hohen Temperaturen große und ungleichmäßige Spannungen in dem Sägeblatt hervorgerufen werden. Bei sehr großen und mit einer Vielzahl von Schneideinsätzen bestückten Kreissägeblättern hätte dann außerdem der Ausfall eines einzigen Schneidzahnes bzw. einer Lötplatte den Ausfall des gesamten Kreissägeblattes zur Folge. Durch den Einsatz einzelner Segmentplatten ist es jedoch möglich geworden, daß man sich auf den Austausch einer Segmentplatte beschränkt, wenn ein Schneideinsatz defekt geworden oder verschlissen ist, wobei ein entsprechendes Ringsegment nur relativ wenige Schneideinsätze trägt. Bei dem bekannten Kreissägeblatt sind Segmente in Form von Ringabschnitten an den Umfang der kreisförmigen Scheibe genietet und in die einzelnen Segmente sind Sägezähne aus einem speziellen Schneidmetall eingelötet oder eingeschweißt.

Auch bei dem Gegenstand der oben erwähnten FR-A-2 249 736 sind die Segmentplatten und das Sägeblatt über einen Schlitz, der in den Segmentplatten ausgebildet ist und einen entsprechenden Steg am äußeren Rand des Kreissägeblattes, der in den Schlitz eingreift, miteinander verbunden, wobei ebenfalls Nieten verwendet werden, sich durch koaxial ausgerichtete Bohrungen in dem Steg und den Schlitzwänden erstrecken.

Dabei ist sowohl der Wechsel einzelner Segmentplatten durch Abschleifen der Nieten und Annieten eines neuen Segmentes als auch, im Falle der DE 556,441, der Wechsel einzelner Schneidzähne aus den Segmenten durch Erhitzen und Neuverlöten oder durch Auftrennen und Neuverschweißen aufwendig und zeitraubend und außerdem ist häufig noch eine Nachbearbeitung der Zähne erforderlich, damit die Schneidkanten relativ zueinander die richtige Position haben, da ein positionsgenaues Einlöten, Verschweißen oder Vernieten schwierig ist.

Daneben sind auch Schlitzfräser bekannt, die einen ähnlichen Aufbau haben und bei welchen Schneideinsätze in entlang des Umfanges einer Scheibe angeordneten Ringsegmenten lösbar befestigt sind (siehe österreichisches Patent Nr. 237,998). Über die Art der lösbaren Befestigung ist allerdings dieser Druckschrift nichts Konkretes zu entnehmen. Das Problem des Lockerns der Schneideinsätze aufgrund von Stoßbelastungen, wie sie an den Zähnen von Kreissägeblättern auftreten, wird in dieser Schrift nicht berücksichtigt.

Aus der EP-A-0 095 062 ist ein Sägeblatt bekannt, bei welchem Schneideinsätze mit Hilfe eines Klemmfingers, der durch zwei benachbarte Schlitze gebildet wird, unmittelbar in dem Sägeblatt festgeklemmt werden. Diese zeigt jedoch keine an dem Kreissägeblatt zu befestigenden Segmentplatten.

Bei dem bekannten Stand der Technik wird als nachteilig angesehen, daß aufgrund des Einlötens, Verschweißens oder Vernietens von Schneideinsätzen bzw. Segmentplatten die Position der Schneidkanten nicht exakt genug festgelegt werden kann, so daß entweder ein Nachbearbeiten oder Nachschleifen erforderlich ist oder aber ein recht schneller Verschleiß einzelner Schneideinsätze auftritt. Außerdem werden die beim Sägen stoßartig auftretenden Kräfte in Umfangsrichtung nur durch Nieten übertragen. Das Vernieten der einzelnen Segmentplatte mit einer Kreissägescheibe hat auch den Nachteil, daß das Lösen und Befestigen einzelner Segmentplatten relativ aufwendig ist, da zunächst die Nieten durch Abschleifen, Durchschlagen oder ähnliche Methoden entfernt werden müssen.

Zwar sind bereits Fräser bekannt, welche für die Befestigung von Wechselplatten, insbesondere von Hartmetall-Wechselplatten einen Schlitz und einen Klemmfinger aufweisen, mit welchem die Wechselplatten befestigt und festgehalten werden, jedoch treten an den Zähnen von Sägen und insbesondere auch von Kreissägen sehr heftige Stoßbelastungen auf, die sehr leicht zu einer Lockerung der Zähne und/oder der Segmente führen können, weshalb im Stand der Technik die erwähnten Befestigungen mittels Nieten oder Verlöten und Verschweißen gewählt wurden.

Gegenüber dem vorstehend genannten Stand der Technik liegt der vorliegenden Erfindung die Aufgabe zugrunde, ein mit Segmentplatten bestücktes Kreissägeblatt mit den oben genannten Merkmalen zu schaffen, welches mit einfachen Mitteln einen schnellen und positionsgenauen Wechsel der Schneideinsätze und/oder der Segmentplatte zusammen mit den Schneideinsätzen ermöglicht.

Diese Aufgabe wird durch die Merkmale des Anspruchs 1 gelöst.

Die Überlappung der dünneren Plattenbereiche und die paßgenaue Ausbildung von Vorsprüngen an den Segmentplatten und entsprechenden Aussparungen im Kreissägeblatt ermöglicht einen schnellen Austausch der Segementplatten ohne nachträgliches Neupositionieren und Ausrichten der Schneideinsätze, die schon zuvor an allen Segmentplatten in der jeweils gleichen Position fixiert werden können.

Derartige Kreissägeplatten können mit Durchmessern von z.B. 2 bis 3 m hergestellt werden, wobei noch größere Durchmesser weniger eine Frage der technischen Machbarkeit, sondern lediglich eine Frage der Wirtschaftlichkeit sind.

Das Vorsehen jeweils eines verdünnten Abschnittes an der Segmentplatte und an dem Sägeblatt, in Verbindung mit dem Vorsprung an dem einen dieser Teile und eine Aussparung an dem anderen dieser Teile gewährleistet eine exakte Positionierung der Segmentplatten und damit auch der Schneideinsätze ohne Vernieten oder Verlöten, wobei Segmentplatte und Sägeblatt zum Beispiel durch Schrauben miteinander verbunden werden, die sich quer durch das Sägeblatt hindurcherstrecken, jedoch in ihrer Länge die Dicke des Sägeblattes nicht übersteigen dürfen.

Es hat sich außerdem herausgestellt, daß durch die Aufnahme des Schneideinsatzes in einem Schlitz mit zusätzlicher Fixierung durch einen Klemmkeil, der einen Klemmfinger fest an die Wechselplatte anpreßt, eine ausreichende Befestigung der Wechselplatten möglich ist. Diese Art der Befestigung bietet gleichzeitig die Möglichkeit eines schnellen Wechsels von Hartmetall-Wechselplatten in den einzelnen Segmenten, so daß es nicht unbedingt erforderlich ist, beim Auftreten von Beschädigungen an den Schneidelementen ganze Segmentplatten auszutauschen, sondern vielmehr die Segmentplatten an einem Grundteil, z.B. der Scheibe eines Kreissägeblattes, befestigt bleiben können und lediglich eine einzelne Hartmetall-Wechselplatte bzw. ein einzelner Schneideinsatz ausgetauscht wird. Dabei bietet diese Art von Befestigung gleichzeitig die Möglichkeit einer positionsgenauen Anordnung der Wechselplatte, so daß ihre Schneidkante in einer exakt definierten Lage bezüglich der Schneidkanten der übrigen Schneideinsätze der zugehörigen Segmentplatte und auch bezüglich der Schneideinsätze der übrigen Segmentplatten liegt.

In der bevorzugten Ausführungsform der Erfindung sind an dem Aufnahmeschlitz der Segmentplatte durch den elastisch bewegbaren Klemmfinger einerseits und einen gegenüberliegenden, im wesentlichen starren Teil der Segmentplatte andererseits zwei mehr oder weniger spitzwinklig zueinander verlaufende Wände vorgesehen. Dabei sollte auch der einzufügende Schneideinsatz in entsprechender Weise gegenüberliegende Klemmflächen haben, die ebenfalls unter einem spitzen Winkel zueinander verlaufen, der eventuell etwas größer sein kann als der Winkel, unter dem die Aufnahmeflächen bzw. Klemmflächen im Aufnahmeschlitz der Segmentplatte relativ zueinander haben. Die Maße von Schneideinsatz und Aufnahmeschlitz sind dabei so gewählt, daß durch Einschieben des Schneideinsatzes der Klemmschlitz etwas aufgeweitet wird und der Klemmfinger bereits unter Vorspannung an dem Schneideinsatz anliegt. Durch die Aufweitung des Aufnahmeschlitzes vergrößert sich auch der Winkel der Klemmflächen in Richtung auf den Wert, unter welchem die entsprechenden Flächen am Schneideinsatz zueinander geneigt sind.

Andererseits ist jedoch durch den zusätzlich vorgesehenen Klemmkeil in einem benachbarten Schlitz eine derartige Vorspannung des Klemmfingers nicht zwingend erforderlich, da die nötige Klemmspannung durch das Einschieben des Klemmkeiles in den benachbarten Schlitz erzielt wird. Für das Erzielen der Vorspannung ist es selbstverständlich auch nicht erforderlich, daß der Aufnahmeschlitz zueinander geneigte, gegenüberliegende Flächen aufweist, denn der Klemmfinger wird auch dann durch Einschieben eines Schneideinsatzes mit spitzwinklig zueinandergeneigten Anlageflächen aufgespreizt, wenn der Abstand zwischen Klemmfinger und der gegenüberliegenden Fläche kleiner wird als die Breite bzw. Höhe des Schneideinsatzes.

Besonders zweckmäßig scheint in Verbindung mit der vorliegenden Erfindung die Verwendung von Segmentplatten, die zur Erzielung einer leichten Vorspannung des Klemmfingers eine Rampenfläche haben, welche spitzwinklig zu der gegenüberliegenden Stützfläche verläuft, welche an der Anlagefläche des im wesentlichen starren Teils der Segmentplatte anliegt, wobei jedoch am Ende der Rampenfläche ein Knickpunkt vorgesehen ist, an welchem die Rampenfläche in eine Klemmfläche übergeht, welche im wesentlichen parallel oder sogar entgegengesetzt zur Rampenfläche geneigt ist, mindestens aber unter einem kleineren spitzen Winkel zu der gegenüberliegenden Anlagefläche verläuft als die Rampenfläche. Bei einer solchen Ausgestaltung drückt der Klemmfinger bereits mit einer gewissen Vorspannung gegen die Spannfläche des Schneideinsatzes, wobei die Klemmspannung noch zusätzlich durch den in den benachbarten Schlitz eingeführten Klemmkeil vergrößert wird. Gleichzeitig wird jedoch vermieden, daß durch die Klemmkraft eine unter der Keilwirkung spitzwinklige Anlageflächen wirkende, den Schneideinsatz tententiell nach außen drückende Kraft hervorgerufen wird.

Dabei hat es sich als zweckmäßig erwiesen, wenn im Inneren des Aufnahmeschlitzes für eine Wechselplatte eine Anschlagfläche vorgesehen ist, an die eine passende Gegenfläche der Wechselplatte anstößt. Zweckmäßigerweise stößt die Wechselplatte mit ihrer Rückseite an die im Inneren des Schlitzes liegende Anschlagfläche an, welche nicht notwendigerweise den Grund oder das Ende des Schlitzes bilden muß, wohl aber sich im wesentlichen quer zu den Wänden des Schlitzes erstreckt, z.B. rechtwinklig von der vom starren Teil der Segmentplatte gebildeten Wand des Aufnahmeschlitzes ausgeht. Der Schlitz selbst kann dabei, um die Elastizität und Biegefähigkeit des Klemmfingers zu vergrößern, neben der Anschlagfläche und über diese hinaus in die Segmentplatte hinein verlängert sein.

Ebenso ist es jedoch auch möglich, das freie Ende des Klemmfingers als Anschlagfläche zu nutzen. Die Grundlinie des Aufnahmeschlitzes, d.h. die dem Klemmfinger gegenüberliegende Fläche sollte dabei gemäß der vorliegenden Erfindung möglichst in radialer Richtung und generell in etwa senkrechtzur Vorschubbewegung der Schneidelemente verlaufen. Zusätzlich zu der vorstehend beschriebenen Ausgestaltung wird Jedoch gemäß der vorliegenden Erfindung der Klemmfinger noch durch einen zusätzlichen Klemmkeil fest gegen den Schneideinsatz gedrückt, so daß der Schneideinsatz auch in einem Kreissägeblatt einen festen und positionsgenauen Sitz hat und sich im Gebrauch der Säge nicht lockert.

Bei einer anderen Ausführungsform kann jedoch der Aufnahmeschlitz gegenüber der Radialrichtung geneigt sein, so daß die an den Schneideinsätzen angreifenden, tangentialen Kräfte den Schneideinsatzes in Richtung des Schlitzgrundes drücken.

Der Klemmkeil wird vorzugsweise mit einer sich längs durch den Keil hindurch erstreckenden Schraube in einem dem Aufnahmeschlitz benachbarten Schlitz befestigt, wobei der Klemmfinger aus dem zwischen diesen beiden Schlitzen stehengebliebenen Material der Segmentplatte gebildet wird. Hierzu weist der Grund des den Keil aufnehmenden Schlitzes zweckmäßigerweise eine passende Gewindebohrung auf.

Grob gesprochen ist die Segmentplatte in der bevorzugten Ausführungsform eine im wesentlichen ebene Platte, die näherungsweise die Umrisse eines Rechteckes, genauer eines Trapezes, mit vier umlaufenden Kantenflächen hat, von denen jedoch eine der Kantenflächen, vorzugsweise eine der längeren Kanten, ein Zahnflankenprofil und auch mehrere Unterbrechungen in Form von Schlitzen zur Aufnahme der Hartmetallwechselplatten und der Klemmkeile aufweist, während die andere längere Kantenfläche in der Seitenansicht der Platte gerade verläuft. Im einfachsten Fall ist diese Kantenfläche eine schmale, ebene Fläche, sie kann jedoch auch im Querschnitt ein Profil haben, um bei der Befestigung an dem Grundteil eines Sägeblattes gegen Bewegungen aus der Ebene des Sägeblattes heraus gesichert zu sein.

Auch die zwei kürzereren, die beiden längeren Kanten dieses Rechtecks bzw. Trapezes verbindenden Kantenflächen, von denen eine in Vorschubrichtung der Segmentplatte vorn und die andere hinten liegt, sollten in der Seitenansicht im wesentlichen gerade verlaufen, da dies eine sehr einfache und zweckmäßige Ausgestaltung ist, mit welcher mehrere Segmentplatten in einer Reihe hintereinander angeordnet werden können. Vorzugsweise werden die Segmentplatten entlang des Umfanges einer Kreisscheibe angeordnet. Dieses ist jedoch nicht zwingend, die einzelnen Segmente können beispielsweise auch entlang eines mehr oder weniger festen Bandes oder entlang einer Gliederkette befestigt sein.

Auch die vorderen und hinteren Kantenflächen der einzelnen Segmente können profiliert sein, um In die entsprechenden Kantenflächen benachbarter Segmente einzugreifen und so gegenseitig eine exakte Ausrichtung und Führung zu gewährleisten. Die exakte Ausrichtung und Führung wird jedoch auch schon durch die Verbindung der Segmentplatten mit einem Grundteil, z.B. einer Kreissägescheibe, gewährleistet.

Bezüglich des Aufnahmeschlitzes ist festzuhalten, daß in der bevorzugten Ausführungsform der Erfindung die Wände und die Anschlagfläche des Schlitzes so angeordnet bzw. ausgestaltet sind, daß sich bei einer eingesetzten Wechselplatte auf jeder der Flächen ein definierter Anlagepunkt bildet, so daß sich für die Wechselplatte eine wohldefinierte, stabile Lage in dem Aufnahmeschlitz ergibt.

Darüberhinaus ist eine Ausführungsform der Erfindung bevorzugt, bei welcher die Schulter der Segmentplatte im wesentlichen parallel zu der gezahnten Kante verläuft, wobei die Schulterfläche unter Bildung einer Hinterschneidung zur Ebene der Segmentplatte geneigt ist. Wenn die Schulterfläche eben ist, ergibt sich dabei im Profil eine sogenannte "Schwalbung", d.h. die eine Hälfte eines Schwalbenschwanzprofils.

Dabei besteht die im wesentlichen ebene Segmentplatte aus im wesentlichen zwei unterschiedlich dicken Plattenbereichen, wobei der dickere Bereich die gezahnte Kante und die entsprechenden Aufnahmeschlitze für Wechselplatten und Keile aufweist und durch eine Schulter in einer Seitenfläche von dem dünneren Segmentplattenbereich getrennt ist. Dieser dünnere Plattenbereich wird dann auf die Scheibe aufgelegt und an dieser befestigt, wobei die Schulter auf einer Außenkante des Grundteiles aufliegt. Durch diese Ausgestaltung ist es in einfacher Weise möglich, auch ganze Segmentplatten, die mindestens einen, gegebenenfalls auch mehrere Schneideinsätze bzw. Wechselplatten aufweisen können, positionsgenau an der Scheibe anzuordnen und zu wechseln. Die Oberfläche des Vorsprunges liegt vorzugsweise parallel zu der Plattenoberfläche und besonders bevorzugt in einer Ebene mit der um die Schulterbreite vorspringenden Oberfläche des dickeren Plattenbereiches. Konkret kann eine solche Segmentplatte beispielsweise aus einer dickeren Platte hergestellt werden, wobei der dünnere Plattenbereich durch Wegfräsen einer Plattenschicht entlang eines Streifens parallel zu der längeren Kante der näherungsweise rechteckigen Segmentplatte erzeugt wird, wobei jedoch gleichzeitig in diesem Streifen ein Teil stehen bleibt, der sich dann als verbleibender Vorsprung aus der Ebene des dünneren Plattenbereiches heraus erhebt.

Dieser Vorsprung hat in der Draufsicht vorzugsweise eine im wesentlichen rechteckige Form, wobei dieses Rechteck sowohl im wesentlichen parallel zu den äußeren Kanten bzw. Umrissen der Segmentplatte, gegebenenfalls aber auch schräg hierzu angeordnet sein kann.

Die Seitenflanken dieses Vorsprunges können senkrecht zu der Ebene der Segmentplatte verlaufen, sie können aber auch leicht geneigt zu der Segmentplattenebene sein, so daß der Vorsprung also die Form eines Pyramidenstumpfes annimmt, vorzugsweise allerdings mit einem relativ kleinen Spitzenwinkel dieser Pyramide. Die Schrägstellung der Seitenflächen kann auch auf eine oder zwei gegenüberliegende Seitenflächen, speziell die radial inneren und äußeren Flächen, beschränkt sein. Der Vorsprung dient vor allem zum exakten Ausrichten des Segmentes und zur Kraftübertragung zwischen Segmentplatte und Kreissägeblatt und ist möglichst genau gefertigt, um paßgenau in einer Aussparung der Scheibe zu sitzen, an welchem die Segmentplatte befestigt wird. Die Seitenflächen des Vorsprunges dienen zur Übertragung der Kräfte von der Scheibe auf die Segmentplatte und umgekehrt, so daß diese Kräfte nicht durch Befestigungselemente aufgenommen werden müssen. Mit Vorteil kann man hierdurch auf Nietbefestigungen verzichten und die Segmentplatte mit Hilfe von Schrauben an der Scheibe befestigen. Hierzu sind zweckmäßigerweise miteinander fluchtende Bohrungen bzw. Gewindebohrungen in der Segmentplatte bzw. der Scheibe vorgesehen.

Eine unter dem Gesichtspunkt einer einfachen Herstellung zu bevorzugende Ausführungsform weist als Vorsprung einen kreisrunden, eventuell auch einen quadratischen Zapfen auf, der für den Eingriff in ein Langloch vorgesehen ist.

Wie bereits erwähnt, sind die Segmentplatten an einem Kreissägeblatt vorgesehen, wobei das betreffende Kreissägeblatt eine Kreisscheibe aufweist, die entlang ihres äußeren Umfanges eine von dem inneren Scheibenteil durch eine Schulter abgesetzte, dünnere Ringzone oder Randzone hat, die sozusagen komplementär zu dem dünneren Segmentplattenbereich ist. Bevorzugt werden dabei die Dicke der Segmentplatte und der Kreisscheibe und vor allem auch die Dicken der dünneren Bereiche der Segmentplatte und der Kreisscheibe, die aufeinanderzuliegen kommen, so aufeinander abgestimmt, daß die Oberflächen der Segmentplatte und der Kreisscheibe beidseitig bündig miteinander abschließen, d.h. in einer gemeinsamen Ebene liegen. Da in der bevorzugten Ausführungsform die Segmentplatte eine in der Seitenansicht gerade verlaufende Kantenfläche hat, ist in analoger Weise vorgesehen, daß die dünnere Ringzone bzw. die Schulter, welche die dünnere Ringzone von dem inneren Bereich der Scheibe absetzt, aus einer Vielzahl gerader Abschnitte besteht, welche zusammen einen Polygonzug bilden.

Herstellungstechnisch kann es jedoch zweckmäßiger und deshalb auch bevorzugt sein, wenn die radialen Anlageflächen (in Umfangsrichtung verlaufende Flächen, die radiale Kräfte aufnehmen), Kreisbogensegmente sind, deren Radius genau dem Abstand zum Mittelpunkt des Kreissägeblattes entspricht. Damit kann man zwar die Segmentplatten nicht mehr für Kreissägeblätter unterschiedlichen Durchmessers verwenden, jedoch wird die Herstellung der Kreissägeblätter und auch der Segmentplatten selbst wesentlich vereinfacht, so daß eine solche Ausführungsform insbesondere dann bevorzugt ist, wenn relativ große Serien eines festen Durchmessers hergestellt werden.

Sofern auch, was bevorzugt ist, die Schulter der Segmentplatte parallel zu der geraden Längskante der Segmentplatte verläuft, so verläuft selbstverständlich auch die Außenkante der Ringzone der Scheibe in einem entsprechenden Polygonzug. Die Ringzone und der dünnere Segmentplattenbereich haben vorzugsweise exakt die gleiche Breite, so daß im montierten Zustand der Segmentplatten die Schulter der Segmentplatte genau auf der Außenkante der Scheibe bzw. der Ringzone der Scheibe aufliegt, während die radial innen liegende Längskante der Segmentplatte genau auf der Schulter aufsitzt, welche den Übergang des inneren Scheibenteils zur Ringzone bildet. Wie bereits erwähnt, sollte die Schulter der Segmentplatte in der bevorzugten Ausführungsform eine Hinterschneidung bilden und z.B. nach Art eines halben Schwalbenschwanzprofils ausgebildet sein. In entsprechender Weise ist dann auch die Außenkante der Ringzone passend abgeschrägt, wobei auch die Schulter auf der Kreisscheibe und die Grundkante der Segmentplatte eine entsprechende Abschrägung aufweisen können. Soll in einem solchen Fall der die Kräfte zwischen Segmentplatte und Grundscheibe übertragende Vorsprung auch radiale Kräfte gut übertragen, so müssen auch die radial innen bzw. außen liegenden Seiten dieses Vorsprunges entsprechend abgeschrägt sein, damit der Vorsprung einen paßgenauen Sitz in einer Aussparung hat, die an der entsprechenden Stelle jeweils in den einzelnen Abschnitten der Ringzone vorgesehen sind. Es versteht sich, daß die durchgehenden Aussparungen in den Abschnitten der Ringzone generell die genau passende komplementäre Form zu dem an der Segmentplatte vorgesehenen Vorsprung haben. Da die Segmentplatte in dem Bereich des Vorsprunges ihre volle Dicke hat, muß selbstverständlich die Aussparung in der Ringzone der kreisförmigen Scheibe durchgehend ausgebildet sein. Im einfachsten Fal hat die Aussparung die Form eines Langloches

Die auf der Kreisscheibe in einer Reihe hintereinander angeordneten Segmentplatten müssen nicht notwendigerweise aneinamder anliegen. Vielmehr können die Segmente einen kleinen Abstand voneinander haben, so daß sie eventuell auch auf Kreisscheiben mit etwas kleinerem oder größeren Durchmesser angeordnet werden können, zumindest aber mögliche Herstellungstoleranzen kompensieren können.

Weitere Vorteile, Merkmale und Anwendungsmöglichkeiten der vorliegenden Erfindung werden deutlich anhand der folgenden Beschreibung bevorzugter Ausführungsformen und der dazugehörigen Figuren. Es zeigen:
- Figur 1: einen Ausschnitt aus einem Kreissägeblatt mit daran befestigten Segmentplatten,
- Figur 2: einen vergrößerten Ausschnitt aus Figur 1,
- Figur 3: eine Detailansicht einer Ausführungsform mit einer speziell gestalteten Schlitzaufnahme 3 und einem entsprechend angepaßten Schneideinsatz 5,
- Figur 4: verschiedene Querschnittsansichten der Segmentplatte und des Kreissägeblattes und
- Figur 5: einen Ausschnitt aus einem Kreissägeblatt, in welchem mehrere Varianten von Segmentplatten und Sägeblattgestaltungen gleichzeitig dargestellt sind.

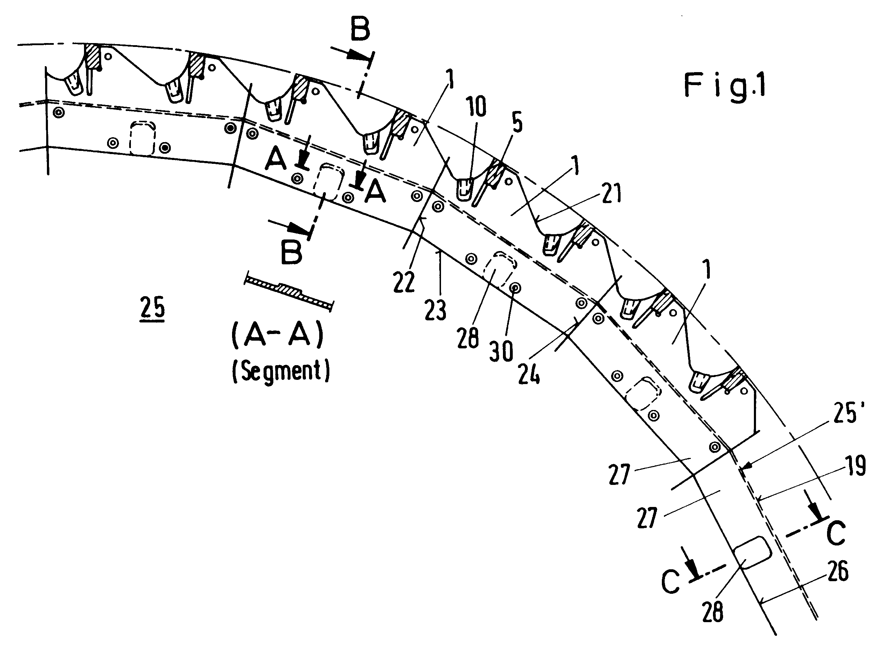

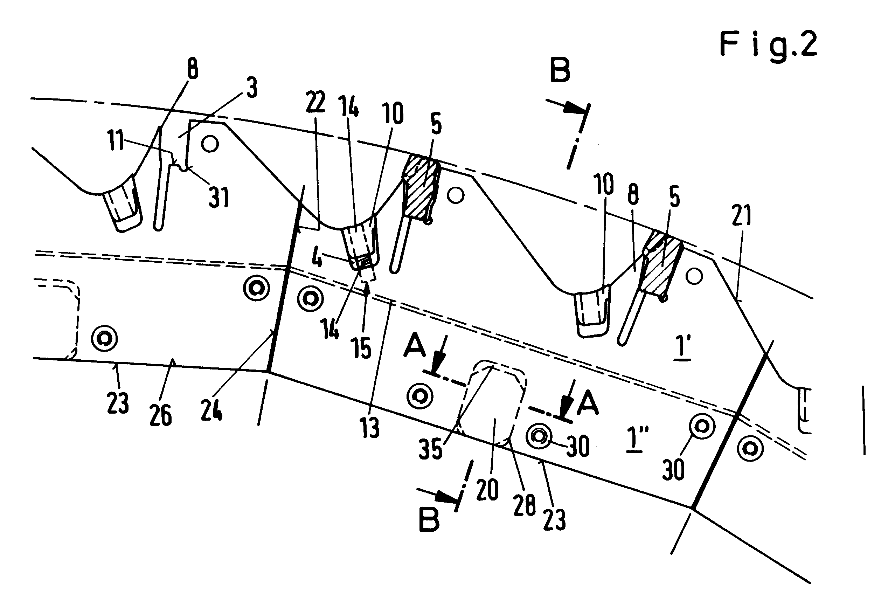

Man erkennt in Figur 1 ein im wesentlichen kreisförmiges Grundteil 25 eines Kreissägeblattes. Die Scheibe bzw. das Grundteil 25 hat eine verdünnte Randzone 25', welche aus einzelnen, insgesamt einen Polygonzug bildenden, geraden Abschnitten 27 besteht. Der Übergang von dem inneren Scheibenteil bzw Grundteil 25 zu der dünneren Randzone 25' bzw. den Abschnitten 27 wird durch eine Schulter 26 gebildet, die in dem dargestellten Beispiel eine sich senkrecht zur Plattenebene erstreckende Fläche bildet. Jeder Abschnitt 27 weist eine im wesentlichen rechteckige, durchgehende Aussparung 28 auf. An jedem Abschnitt 27 ist eine Segmentplatte 1 befestigt. Die Segmentplatte 1 besteht ebenfalls aus einem dickeren Plattenbereich 1' (siehe Figur 2) und einem dünneren Plattenbereich 1''. Der dickere Plattenbereich 1' liegt außerhalb des Randes 19 der Kreissägescheibe bzw. der einzelnen Randabschnitte 27. Der dünnere Plattenbereich 1'' überlappt jeweils mit einem der Abschnitte 27 der dünneren Randzone 25' der Kreissägescheibe 25. Jede Segmentplatte 1 ist mit vier Befestigungsschrauben 30 (siehe Figur 2) an einem Abschnitt 27 befestigt. Dabei weist der dünne Segmentplattenbereich 1'' jeweils einen Vorsprung 20 auf, der in die Aussparung 28 eines Abschnittes 27 mit möglichst genauer und enger Passung eingreift.

Der Vorsprung 20 und die Aussparung 28 sind in der Draufsicht im wesentlichen rechteckig, wobei die enge Passung vor allem in Umfangsrichtung des Kreissägeblattes wichtig ist, da nämlich über den in die Aussparung 28 eingreifenden Vorsprung 20 die Vorschubkräfte von der Kreisscheibe 25 auf die einzelnen Segmentplatten 1 übertragen werden soll, so daß die Schrauben 30 lediglich dazu dienen, die Segmentplatte 1 an dem jeweiligen Abschnitt 27 festzuhalten, die Kraftübertragung zumindest in Umfangsrichtung jedoch im wesentlichen über den Vorsprung 20 und die Aussparung 28 bzw. deren aneinanderliegende Wände erfolgt.

Jede Segmentplatte 1 hat in der seitlichen Draufsicht in grober Näherung die Form einer rechteckigen Platte, wobei jedoch eine Längsseite dieses Rechteckes gezahnt ist und außerdem zusätzlich zu dem Zahnprofil noch Schlitze 3, 4 in den Zähnen aufweist. Die dem Zahnflankenprofil 21 gegenüberliegende Kantenfläche 23 verläuft in der Seitenansicht ebenso gerade wie auch die kurzen Kantenflächen 22 und 24, welche die beiden Längsseiten 21 und 23 miteinander verbinden. Die gegenüberliegenden kurzen Kantenflächen 22, 24 verlaufen nicht exakt parallel zueinander wie bei einem gewöhnlichen Rechteck, sondern sind leicht gegeneinander geneigt, so daß sie in der dargestellten Ausführungsform nach der Montage an der Kreisscheibe 25 im wesentlichen in radialer Richtung verlaufen und an den entsprechenden Seiten benachbarter Segmente 1 anliegen.

Jede Segmentplatte 1 weist im wesentlichen zwei Zähne auf, in deren Spitzenbereich jeweils ein Schlitz 3 für die Aufnahme einer Wechselplatte 5 bzw. eines Schneideinsatzes 5 vorgesehen ist. Daneben ist in der Nähe des Grundes zwischen zwei Zahnflanken ein weiterer Schlitz 4 vorgesehen, in welchen ein Keil eingreift. Der jeweils zwischen den beiden relativ eng nebeneinander liegenden Schlitzen 3, 4 stehengebliebene Materialteil der Segmentplatte 1 bildet einen Klemmfinger 8. Beide Schlitze 3, 4 verlaufen mit nach außen leicht divergierenden Wänden, so daß zunächst beim Einsetzen eines passenden Schneideinsatzes bzw. einer Wechselplatte 5 mit einem passenden keilförmigen Abschnitt der Spannfinger 8 beim Eingriff mit den Seiten der Wechselplatte 5 federnd zurückgebogen wird und die Wechselplatte 5 in ihrer eingesetzten Steilung durch Reibeingriff festhält. Anschließend wird der Keil 10, der zuvor in dem Schlitz 4 gelockert worden ist, tiefer in den Schlitz 4 hineingeschoben mit Hilfe einer Schraube 14, die in eine Gewindebohrung 15 am Grund des Schlitzes 4 eingreift und im übrigen eine Bohrung des Keiles 10 durchgreift und mit ihrem Kopf an der Oberseite des Keiles 10 gesichert ist. Durch Festziehen der Schraube 14 wird der Keil 10 tiefer in den Schlitz 4 hineingetrieben und preßt damit den Spannfinger 8 noch fester gegen die Wechselplatte 5. Durch diesen zusätzlichen Klemmeffekt wird die Wechselplatte 5 durch den Spannfinger 8 genügend festgehalten, so daß auch bei starken Stoßbelastungen ein Lockern der Wechselplatte 5 nicht auftritt.

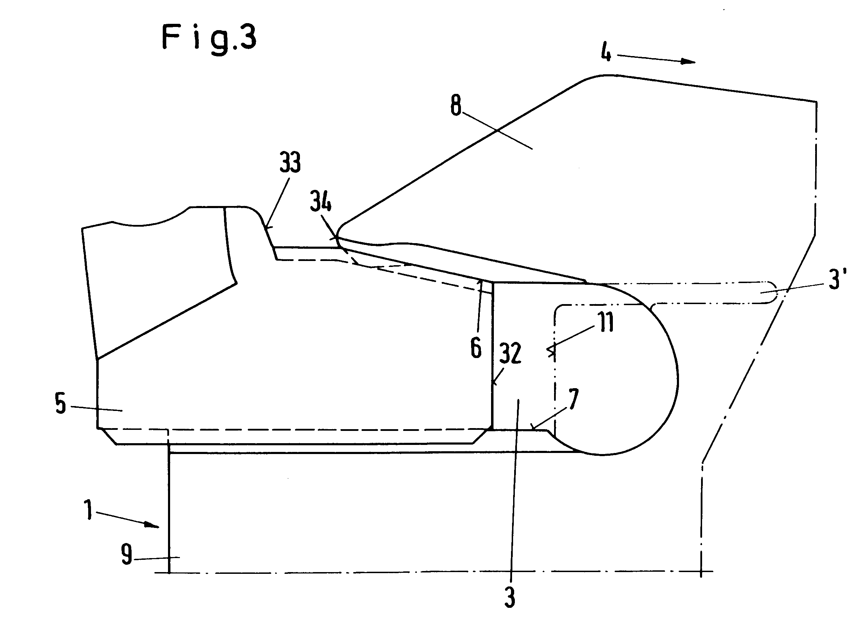

Einzelheiten einer Ausführungsform mit einer besonderen Ausgestaltung des Schlitzes 3 und einem entsprechend angepaßten Schneideinsatz 5 sind in Figur 3 dargestellt. Die entsprechende Form des Schneideinsatzes 5 und des Schlitzes 3 mit den gegenüberliegenden Wänden 6 und 7 ist in der europäischen Patentanmeldung mit der Veröffentlichungs-Nr. 242.343 ausführlich beschrieben, so daß an dieser Stelle auf die entsprechende Beschreibung Bezug genommen werden soll, da hinsichtlich dieser Schlitzgestaltung und der Ausgestaltung des Schneideinsatzes 5 die in Figur 3 dargestellte Ausführungsform vollständig mit der dort beschriebenen übereinstimmt. Zusätzlich sind jedoch in Figur 3 noch einige Varianten angedeutet. So kann beispielsweise im Inneren des Schlitzes eine Anschlagfläche 11 für die rückwärtige Fläche 32 des Schneideinsatzes 5 vorgesehen sein, so daß nicht die an einer Schulter des Schneideinsatzes 5 vorgesehene Anschlagfläche 33 an der Nase des Spannfingers 5 anschlagen muß. Außerdem kann der Schlitz 3 unabhängig von der Anschlagfläche 11 oder auch zusätzlich zu dieser eine rückwärtige Schlitzverlängerung 3' aufweisen, um den möglichen Federweg und die Elastizität des Spannfingers 8 zu vergrößern. Unmittelbar an den Spannfinger 8 schließt sich der Schlitz 4 an, der jedoch in Figur 3 nicht näher dargestellt ist, der jedoch genau dem in Figur 2 dargestellten Schlitz für die Aufnahme eines Keiles 10 ausgestaltet ist, welcher mit Hilfe einer Spannschraube 14 in eine Bohrung 15 am Grund des Schlitzes 4 eingeschraubt werden kann.

Bei einer Ausführungsform entsprechend Figur 3 ist es auch nicht notwendig, daß die Fläche 6 des Klemmfingers spitzwinkelig zu der Fläche 7 auf der gegenüberliegenden Seite des Schlitzes verläuft. Diese Fläche muß nicht notwendigerweise mit der näherungsweise parallel hierzu verlaufenden Rampenfläche an der Oberseite des Einsatzes 5 verlaufen, wenn die Klemmung durch das vordere Ende des Klemmfingers auf der vorderen Klemmfläche des Schneideinsatzes 5, die in etwa parallel zu der Fläche 7 verläuft, ausreichend ist.

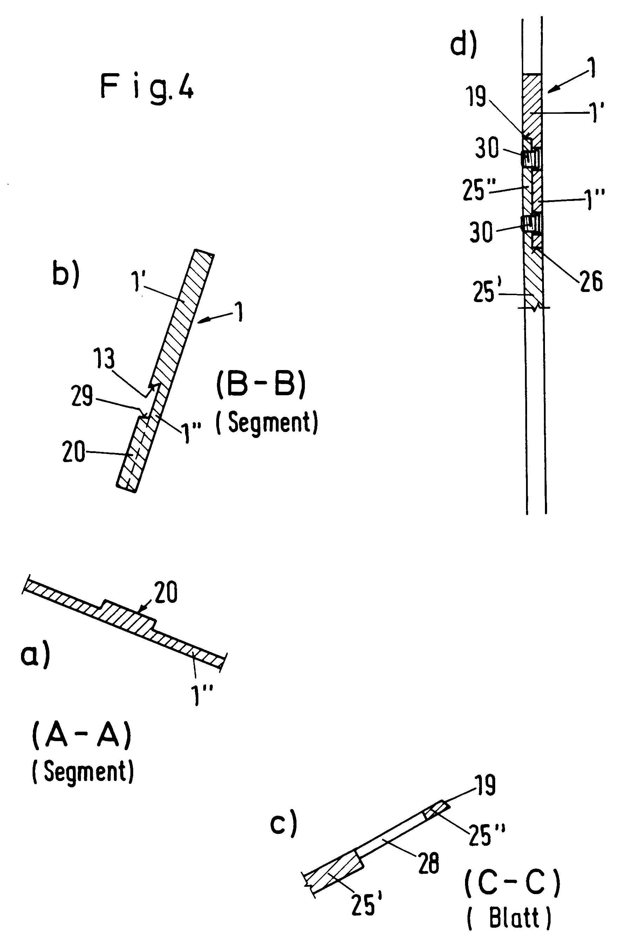

In Figur 4 erkennt man verschiedene Schnittansichten, wobei die Schnitte a,b, und c in Figur 1 in dieser Reihenfolge mit A-A, B-B und C-C in Figur 1 in ihrer Lage angedeutet sind. Das Schnittbild der Figur 4d entspricht einer radialen Schnittlinie durch das Sägeblatt und eine daran befestigte Segmentplatte zunächst durch eine der äußeren Schrauben 30 und dann auch durch die innere Schraube 30. Man erkennt im Schnitt a, daß der dünnere Plattenbereich 1'' einen Vorsprung 20 aufweist, wobei im Bereich des Vorsprunges 20 die Segmentplatte 1 dieselbe Dicke hat wie im dickeren Plattenbereich 1'. In Figur 4b erkennt man in einer zu Figur 4a senkrechten Schnittlage ebenfalls den Vorsprung 20 und gleichzeitig auch einen Abschnitt des dünneren Plattenbereiches 1'' sowie des dicken Plattenbereiches 1', welche durch eine Schulter 13 voneinander getrennt sind. Die Schulter 13 wird durch eine ebene, zur Segmentplatte 1 geneigte Fläche gebildet, so daß eine Hinterschneidung bzw. eine sogenannte "Schwalbung" entsteht, d.h. ein Teil eines Schwalbenschwanzprofils. Die Oberseite 29 des Vorsprunges 20 kann entweder die gleiche Neigung aufweisen wie die Schulter 13, sie kann jedoch auch senkrecht zu der Plattenebene der Segmentplatte 1 verlaufen. In letzterem Falle muß jedoch die entsprechende Aussparung 28 für den Vorsprung 20 in radialer Richtung des Kreissägeblattes ein entsprechendes Spiel aufweisen, damit der Vorsprung 20 in die Aussparung 28 eingeführt und gleichzeitig die schräge Schulter 13 auf die entsprechend angeschrägte Außenkante 19 der Ringzone 25'' bzw. der Abschnitte 27 dieser Ringzone 25' aufgesetzt werden kann. Die angeschrägte freie Kante 19 der Ringzone bzw. Randzone 25' ist im Schnitt der Figur 4c gut zu erkennen, deren Schnittebene gleichzeitig auch durch die durchgehende Aussparung 28 verläuft. Man erkennt aus den Schnittansichten der Figur 4, daß die Dickenbereiche 1' der Segmentplatte und 25 der Kreisscheibe im wesentlichen gleich dick sind und daß auch die dünnen Bereiche 1'' und 25' der Segmentplatte bzw. der Kreisscheibe 25 im wesentlichen gleich dick und zwar jeweils gerade halb so dick sind wie die Dickenbereiche 1' bzw. 25. Im zusammenmontierten Zustand ergibt sich damit eine in Figur 4d dargestellte Schnittansicht, wobei, wie bereits erwähnt, die Schnittlinien hier radial und stufenweise zwischen den Schrauben 30 versetzt zueinander verlaufen. Das Kreissägeblatt hat damit eine durchgehend konstante Dicke vom Bereich 25 bis hin zu dem Bereich 1' der Segmentplatten. Vorzugsweise weist die dünne Randzone 25'' für die Schrauben 30 passende Gewindebohrungen auf, deren Kopf zusammen mit den entsprechenden Bohrungen in dem dünneren Bereich 1'' der Segmentplatte so ausgestaltet ist, daß die Schrauben bündig mit der Oberfläche der Segmentplatte 1 abschließen oder leicht versenkt sind. Auch die Gewindelänge der Schrauben 30 ist so bemessen, daß sie nicht über die Oberfläche der Kreisscheibe bzw. Grundplatte 25 hinausstehen.

Wie man in den Figuren 2 deutlich erkennt, weist der Vorsprung 20 gegenüber der entsprechenden Aussparung 28 an der radial äußeren Seite ein kleines radiales Spiel 35 auf, welches das Aufsetzen der hinterschnittenen Schulter 13 auf die schräge Kante 19 der Abschnitte 27 ermöglichen soll.

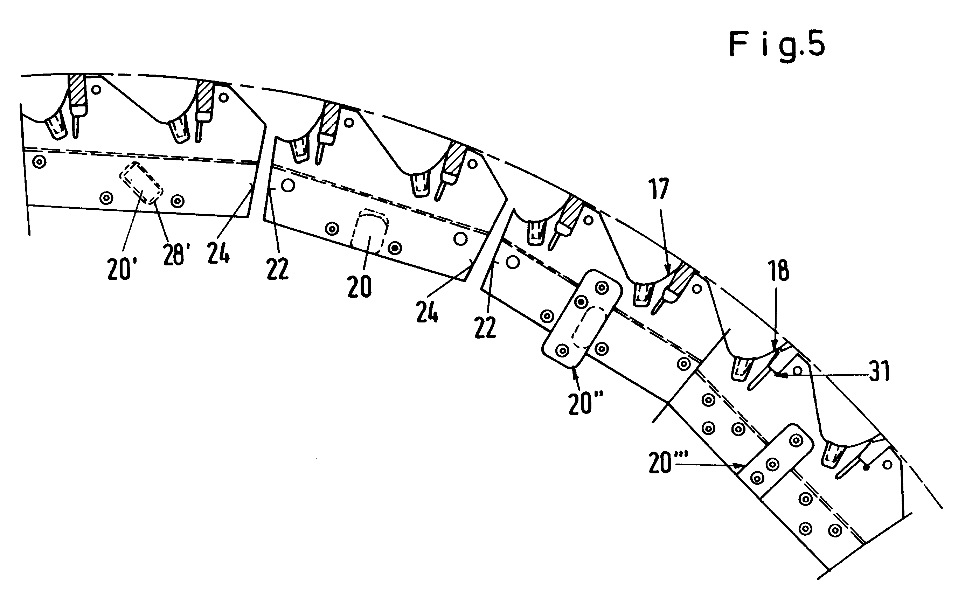

Figur 5 zeigt an derselben Kreisscheibe 25 montiert verschiedene Varianten von Segmentplatten, die selbstverständlich jeweils nur in einer Variante an ein und derselben Platte vorgesehen sein sollten. So erkennt man zunächst verschiedene Typen von Vorsprüngen 20, 20', 20'' und 20'''. Der Vorsprung 20 ist eingehend beschrieben worden.

Der Vorsprung 20' ist in der Draufsicht zwar ebenfalls rechtwinklig, jedoch geneigt bezüglich der Radialrichtung der Kreisscheibe 25. Im Falle der beiden ganz rechts dargestellten Beispiele der Vorsprünge 20'' und 20''' sind diese nicht einstückig mit der Segmentplatte verbunden, sondern separate Teile, die in entsprechende Aussparungen in der Kreisscheibe 25 bzw. dem Ringbereich 25' und dem dünneren Bereich 1'' oder dem dicken Bereich 1''' der Segmentplatte 1 eingesetzt werden. Dies erfordert allerdings zusätzliche Verschraubungen bzw. Befestigungen und ist deshalb weniger bevorzugt.

Im rechten Teil der Figur 5 sind außerdem noch die verschiedenen Varianten des Anschlags der Schneideinsätze 5 in dem Schlitz 3 angedeutet. Mit 17 ist ein Anschlagpunkt zwischen einer Anschlagfläche 33 und der Nase 34 eines Klemmfingers 8 bezeichnet (siehe Figur 3), 18 bezeichnet dagegen ein Spiel zwischen der Nase des Klemmfingers 8 und einer Fläche des Schneideinsatzes 5, der stattdessen mit seiner rückwärtigen Fläche 32 an eine Anschlagfläche 11 im Inneren des Schlitzes 3 anschlägt (siehe Figur 3). Mit 31 ist eine sogenannte "Freiarbeitung" in Form einer 3/4-Bohrung angedeutet, die ein In-Eingriff-Treten der Ecke des Schneideinsatzes mit einer zwischen der Fläche 11 und der Wand 7 des Schlitzes 3 gebildeten Innenecke vermeiden soll, damit die rückwärtige Fläche 32 auf jeden Fall sauber und definiert an der Anschlagfläche 11 anliegt.

Die in Figur 5 mit 101 bezeichnete Segmentplatte unterscheidet sich von den übrigen Segmentplatten nur dadurch, daß sie zu den benachbarten Segmentplatten einen kleinen Abstand der (in Bewegungsrichtung) vorderen und hinteren Seitenkanten 22, 24 aufweist. Ein solcher kleiner Abstand kann bewußt vorgesehen werden, um gegebenenfalls Fertigungstoleranzen auszugleichen. Ein solcher Abstand kann aber auch dadurch auftreten, daß eine Segmentplatte auf einem Kreissägeblatt mit einem geringfügig größeren Durchmesser und der gleichen Segmentplattenzahl eingesetzt wird. Solange der Spalt zwischen benachbarten Segmentplatten hierdurch nicht allzu groß wird und mit Sägespänen verstopft, die Störungen hervorrufen könnten, sind solche Abstände ohne weiteres zu tolerieren, so daß zumindest für relativ eng benachbarte Kreisscheibendurchmesser ein und dieselben Segmentplatten verwendet werden können.

Darüberhinaus können jedoch auch ein und dieselben Segmentplatten für einen gegebenen Kreissägendurchmesser wie auch für näherungsweise den doppelten (und vierfachen) Durchmesser verwendet werden, wenn man in Kauf nimmt, daß dann die vorderen und hinteren Seitenkanten 22, 24 nicht mehr großflächig, sondern nur noch Im Eckbereich des Übergangs zu der gezahnten Kanten 21 aneinander anliegen. Hier wirken sich die geraden Anlageflächen 23, 26 bzw 13, 19 positiv aus da sie eine vom Sägeblattdurchmesser unabhängige Form haben. Ein leichter knick in den Zahnflanken stört dabei nicht. Hierfür wird einfach zwischen je zwei Segmentplatten eine zusätzliche Segmentplatte eingefügt, so daß benachbarte Segmentplatten einander in dem Eckbereich der Kanten 21/22 bzw 21/24 berühren. Dabei verdoppelt sich Radius bis zu diesem Eckbereich und somit näherungsweise auch der Durchmesser des gesamten Sägeblatts, wobei die Kreisscheiben 25 ohne weiteres mit den passenden Durchmessern und Randabschnitten 27 hergestellt werden können.

## Patentansprüche

1. Mit Segmentplatten (1) bestücktes Kreissägeblatt (2), bestehend aus einer im wesentlichen kreisförmigen Scheibe (25), wobei die Scheibe (25) entlang ihres äußeren Umfanges eine vom zentralen Scheibenteil (25') abgesetzte, dünnere Ringzone (25'') aufweist, und mit entlang dieser Ringzone der Scheibe (25) befestigbaren Segmentplatten (1), mit Schlitzen (3, 4) quer zur Ebene der Segmentplatte (1), die mindestens eine Aufnahme für eine Wechselplatte aus Hartmetall definieren, wobei der Aufnahmeschlitz (3) zwei im Abstand einander gegenüberliegende Wände (6, 7) aufweist, von denen eine an einem im wesentlichen starren Teil der Segmentplatte vorgesehen ist, und wobei ein Klemmkeil (10) für die Aufnahme in einem Schlitz vorgesehen ist, **dadurch gekennzeichnet**, daß die Ringzone durch eine Schulter (26) von dem zentralen Scheibenteil abgesetzt ist und jeweils Aussparungen zur Aufnahme von Vorsprüngen der Segmentplatten aufweist, wobei die Segmentplatten ebenfalls aus im wesentlichen zwei unterschiedlich dicken Plattenbereichen bestehen, wobei der dickere Bereich (1') die Schlitze (3, 4) aufweist und durch eine Schulter (13) in einer Seitenfläche von dem dünneren Bereich (1'') getrennt ist und die Segmentplatten in dem dünneren Plattenbereich (1'') jeweils einen Vorsprung (20) haben, der auf der Seite der Schulter (13) aus der Ebene des dünnen Plattenbereichs (1'') hervorsteht und der zur Übertragung von Kräften und zur genauen Positionierung der Segmentplatten (1) an dem Sägeblatt (2) paßgenau für die Aufnahme in den jeweiligen Aussparungen in der Ringzone des Sägeblattes ausgebildet ist, wobei der zwischen den Schlitzen (3, 4) stehengebliebene Teil einen elastisch bewegbaren Klemmfinger (8) definiert, welcher eine der Wände (6, 7) des Aufnahmeschlitzes aufweist, während der andere Schlitz für die Aufnahme des Klemmkeiles (10) vorgesehen ist.

2. Kreissägeblatt nach Anspruch 1, dadurch gekennzeichnet, daß die Ringzone (25'') aus einer Vielzahl im wesentlichen gerader, einen Polygonzug bildende Abschnitte (27) besteht.

3. Kreissägeblatt nach Anspruch 1 oder 2, dadurch gekennzeichnet, daß die Aussparung (28, 28') und der Vorsprung (20, 20') in der Draufsicht rechteckig ausgebildet sind.

4. Kreissägeblatt nach Anspruch 3, dadurch gekennzeichnet, daß die Umfangsseiten des Vorsprungs (20) und der Ausparung (28) im wesentlichen parallel zu den Kantenflächen (21, 22, 23, 24) der Segmentplatte verlaufen.

5. Kreissägeblatt nach Anspruch 1 oder 2, dadurch gekennzeichnet, daß der Vorsprung einen kreisförmigen Querschnitt hat.

6. Kreissägeblatt nach einem der Ansprüche 3 oder 4, dadurch gekennzeichnet, daß der Vorsprung im wesentlichen die Form eines Pyramidenstumpfes hat.

7. Kreissägeblatt nach einem der Ansprüche 1 bis 6, dadurch gekennzeichnet, daß Segmentplatten (1) und Kreisscheibe (25) zusätzlich durch Schrauben miteinander verbunden sind, die sich durch die überlappenden dünnen Bereiche (1''

8. und 25') der Segmentplatte (1) bzw. der Kreisscheibe (25) erstrecken und in ein Gewinde in einem der beiden Teile eingeschraubt sind.

9. Kreissägeblatt nach einem der Ansprüche 1 bis 7, dadurch gekennzeichnet, daß im Inneren des Aufnahmeschlitzes (3) der Segmentplatten (1) eine Anschlagfläche (11) für eine Wechselplatte (5) vorgesehen ist.

10. Kreissägeblatt nach einem der Ansprüche 1 bis 8, dadurch gekennzeichnet, daß der Klemmkeil (10) mit einer sich in Längsrichtung durch den Keil erstreckenden Schraube (14) in einem Schlitz (4) der Segmentplatte (1) befestigbar ist.

11. Kreissägeblatt nach einem der Ansprüche 1 bis 9, dadurch gekennzeichnet, daß die Segmentplatte eine im wesentlichen ebene Platte ist mit im wesentlichen vier umlaufenden Kantenflächen (21, 22, 23, 24), von denen eine ein Zahnflankenprofil und Unterbrechungen bzw. Schlitze zur Aufnahme der Wechselplatten (5) und Klemmkeile (10) aufweist, während mindestens die dem Zahnprofil gegenüberliegende Kantenfläche (23) in der Seitenansicht der Platte (1) gerade verläuft.

12. Kreissägeblatt nach Anspruch 10, dadurch gekennzeichnet, daß die beiden in Vorschubrichtung der Segmentplatte vorn (22) bzw. hinten (24) liegenden Kantenflächen in der Seitenansicht der Segmentplatte (1) gerade verlaufen.

13. Kreissägeblatt nach einem der Ansprüche 1 bis 11, dadurch gekennzeichnet, daß die Wände (6, 7) und die Anschlagfläche (11) des Schlitzes (3) so ausgebildet sind, daß sich bei eingesetzter Wechselplatte (5) auf jeder dieser Flächen ein definierter Anlagepunkt bildet, so daß sich für die Wechselplatte eine wohl definierte, stabile Lage in dem Aufnahmeschlitz (3) ergibt.

14. Kreissägeblatt nach einem der Ansprüche 1 bis 12, dadurch gekennzeichnet, daß die Schulter (13) im wesentlichen parallel zur Vorschubrichtung der Segmentplatte verläuft, wobei die Schulterfläche unter Bildung einer Hinterschneidung zu der Ebene der Segmentplatte geneigt ist.

15. Kreissägeblatt nach einem der Ansprüche 1 bis 13, dadurch gekennzeichnet, daß die Oberfläche des Vorsprunges im wesentlichen parallel zur Plattenoberfläche und vorzugsweise in derselben Ebene wie eine Oberfläche des dickeren Plattenbereiches (1') verläuft.

16. Kreissägeblatt nach einem der Ansprüche 1 bis 14, dadurch gekennzeichnet, daß sie Schlitzaufnahmen für zwei Wechselplatten (1) aufweist.

17. Kreissägeblatt nach einem der Ansprüche 1 bis 15, dadurch gekennzeichnet, daß die gegenüberliegenden Wände (6, 7) des Aufnahmeschlitzes (3) spitzwinklig zueinander verlaufen.

## Claims

1. Circular saw blade (2) provided with segments (1) and comprising an essentially circular disc (25), the disc (25) having along its outer circumference a thinner angular zone (25'') which is offset from the central disc part (25') and having segments (1), which can be fastened along this annular zone of the disc (25), having slots (3, 4) transverse to the plane of the segment (1), which slots define at least one receptacle for an exchange tip made of sintered carbide, the receiving slot (3) having two mutually opposite, spaced-apart walls (6, 7), one of which is provided on an essentially rigid part of the segment, and a clamping wedge (10) being provided in order to be received in a slot, characterized in that the annular zone is offset from the central disc part by a shoulder (26) and in each case has cutouts for receiving projections of the segments, the segments likewise comprising essentially two segment regions of different thicknesses, the thicker region (1') having the slots (3, 4) and being separated from the thinner region (1'') by means of a shoulder (13) in a side face, and the segments each having a projection (20) in the thinner region (1''), which projection protrudes on the side of the shoulder (13) out of the plane of the thin region (1'') and, for the purpose of transmitting forces and accurately positioning the segments (1) on the saw blade (2), is designed to be received in an accurately fitting manner in the respective cutouts in the annular zone of the saw blade, the part remaining between the slots (3, 4) defining an elastically movable clamping finger (8), which has one of the walls (6, 7) of the receiving slot, while the other slot is provided to receive the clamping wedge (10).

2. Circular saw blade according to Claim 1, characterized in that the annular zone (25'') comprises a multiplicity of essentially straight sections (27) which form a polygonal progression.

3. Circular saw blade according to Claim 1 or 2, characterized in that the cutout (28, 28') and the projection (20, 20') are of rectangular design when viewed from above.

4. Circular saw blade according to Claim 3, characterized in that the peripheral sides of the projection (20) and of the cutout (28) run essentially parallel to the edge faces (21, 22, 23, 24) of the segment.

5. Circular saw blade according to Claim 1 or 2, characterized in that the projection has a circular cross-section.

6. Circular saw blade according to one of Claims 3 or 4, characterized in that the projection essentially is in the shape of a truncated pyramid.

7. Circular saw blade according to one of Claims 1 to 6, characterized in that segments (1) and circular disc (25) are additionally connected to one another by means of screws, which extend through the overlapping regions (1'' and 25') of the segment (1) and of the circular disc (25), respectively, and are screwed into a thread in one of the two parts.

8. Circular saw blade according to one of Claims 1 to 7, characterized in that a stop face (11) for an exchange tip (5) is provided inside the receiving slot (3) of the segments (1).

9. Circular saw blade according to one of Claims 1 to 8, characterized in that the clamping wedge (10) can be fastened in a slot (4) of the segment (1) by means of a screw (14) which extends in the longitudinal direction through the wedge.

10. Circular saw blade according to one of Claims 1 to 9, characterized in that the segment is an essentially planar tip with essentially four encircling edge faces (21, 22, 23, 24), of which one has a tooth profile and interruptions or slots for receiving the exchange tips (5) and clamping wedges (10), while at least that edge face (23) which is opposite the tooth profile runs in a straight line when viewed from the side of the tip (1).

11. Circular saw blade according to Claim 10, characterized in that the two edge faces which are situated at the front (22) and at the rear (24) in the direction of advance of the segment run in a straight line when viewed from the side of the segment (1).

12. Circular saw blade according to one of Claims 1 to 11, characterized in that the walls (6, 7) and the stop face (11) of the slot (3) are designed such that when the exchange tip (5) is inserted a defined stop point is formed on each of these faces, so that a well-defined, stable position in the receiving slot (3) is produced for the exchange tip.

13. Circular saw blade according to one of Claims 1 to 12, characterized in that the shoulder (13) runs essentially parallel to the direction of advance of the segment, the face of the shoulder being inclined with respect to the plane of the segment so as to form an undercut.

14. Circular saw blade according to one of Claims 1 to 13, characterized in that the surface of the projection runs essentially parallel to the surface of the tip and preferably in the same plane as a surface of the thicker segment region (1').

15. Circular saw blade according to one of Claims 1 to 14, characterized in that it has slot receptacles for two exchange tips (1).

16. Circular saw blade according to one of Claims 1 to 15, characterized in that the opposite walls (6, 7) of the receiving slot (3) run towards one another at an acute angle.

## Revendications

1. Lame de scie circulaire (2) équipée de segments en forme de plaques (1) et constituée par un disque essentiellement circulaire (25), le disque (25) possédant le long de sa périphérie extérieure, une zone annulaire plus mince (25''), décalée par rapport à la partie centrale (25') du disque, et comportant des segments en forme de plaques (1), qui peuvent être fixés le long de cette zone annulaire du disque (25), des fentes (3,4) s'étendant transversalement par rapport au plan des segments en forme de plaques (1) et qui définissent au moins un logement pour une plaque interchangeable en métal dur, et dans lequel la fente de logement (3) comporte deux parois (6,7) situées en vis-à-vis et à distance l'une de l'autre et dont l'une est prévue sur une partie essentiellement rigide du segment en forme de plaque, et dans laquelle il est prévu un coin de blocage (10) destiné à être logé dans une fente, caractérisée en ce que la zone annulaire est décalée par un épaulement (26) par rapport à la partie centrale du disque et comporte respectivement des évidements servant à loger des appendices saillants des segments en forme de plaques, et dans laquelle les segments en forme de plaques sont constitués essentiellement de deux parties de plaque ayant des épaisseurs différentes, la partie plus épaisse (1') comporte les fentes (3,4) et est séparée de la partie plus mince (1'') par un épaulement (13) formé dans une surface latérale et les segments en forme de plaques possèdent, dans la partie la plus mince (1'') de la plaque, respectivement un appendice saillant (20), qui fait saillie sur le côté de l'épaulement (13) hors du plan de la partie la plus mince (1'') de la plaque et qui sert à transmettre des forces et à positionner de façon précise les segments en forme de plaques (1) sur la lame de scie (2) pour leur logement dans les évidements respectifs dans la zone annulaire de la lame de scie, la partie, qui subsiste entre les fentes (3,4), définissant un doigt de blocage (8) déplaçable élastiquement, qui forme l'une des parois (6,7) de la fente de logement, tandis que l'autre fente est destinée à loger le coin de blocage (10).

2. Lame de scie circulaire selon la revendication 1, caractérisée en ce que la zone annulaire (25'') est formée par une multiplicité de parties essentiellement rectilignes (27) formant un contour polygonal.

3. Lame de scie circulaire selon la revendication 1 ou 2, caractérisée en ce que l'évidement (28,28') et l'appendice saillant (20,20') sont réalisés avec une forme rectangulaire selon une vue en plan.

4. Lame de scie circulaire selon la revendication 3, caractérisée en ce que les faces circonférentielles de l'appendice saillant (20) et de l'évidement (28) sont essentiellement parallèles aux surfaces (21,22,23,24) des bords du segment en forme de plaque.

5. Lame de scie circulaire selon la revendication 1 ou 2, caractérisée en ce que l'appendice saillant possède une section transversale de forme circulaire.

6. Lame de scie circulaire selon l'une des revendications 3 ou 4, caractérisée en ce que l'appendice saillant possède essentiellement la forme d'un tronc de pyramide.

7. Lame de scie circulaire selon l'une des revendications 1 à 6, caractérisée en ce que les segments en forme de plaques (1) du disque circulaire (25) sont en outre reliés entre eux par des vis, qui traversent les parties minces (1'' et 25'), qui se chevauchent, du segment en forme de plaque (1) du disque circulaire (25) et sont vissées dans un filetage formé dans l'une des deux parties.

8. Lame de scie circulaire selon l'une des revendications 1 à 7, caractérisée en ce qu'une surface de butée (11) pour une plaque interchangeable (5) est prévue à l'intérieur de la fente de logement (3) des segments en forme de plaques (1).

9. Lame de scie circulaire selon l'une des revendications 1 à 8, caractérisée en ce que le coin de blocage (10) peut être fixé par une vis (14), qui traverse le coin dans la direction longitudinale, dans une fente (4) du segment en forme de plaque (1).

10. Lame de scie circulaire selon l'une des revendications 1 à 9, caractérisée en ce que le segment en forme de plaque est essentiellement une plaque plane comportant essentiellement quatre surfaces circonférentielles de bord (21,22,23,24), dont l'une possède un profil en forme de flanc de dent et des interruptions ou fentes servant à loger les plaques interchangeables (5) et les coins de blocage (10), tandis qu'au moins la surface de bord (23), située à l'opposé du profil de dent, s'étend selon une disposition rectiligne, lorsqu'on regarde la plaque (1) selon une vue en élévation latérale.

11. Lame de scie circulaire selon la revendication 10, caractérisée en ce que les deux surfaces de bord, qui sont situées en avant (22) et en arrière (24) par rapport à la direction d'avance du segment en forme de plaque, ont une configuration rectiligne lorsqu'on regarde la plaque du segment en forme de plaque (1) selon une vue en élévation latérale.

12. Lame de scie circulaire selon l'une des revendications 1 à 11, caractérisée en ce que les parois (6,7) et la surface de butée (11) de la fente (3) sont agencées de telle sorte que, lorsqu'une plaque interchangeable (5) est insérée, un point d'application défini est formé sur chacune de ces surfaces de sorte qu'on obtient pour la plaque interchangeable une position stable bien définie dans la fente de logement (3).

13. Lame de soie circulaire selon l'une des revendications 1 à 12, caractérisée en ce que l'épaulement (13) est sensiblement parallèle à la direction d'avance du segment en forme de plaque, la surface de l'épaulement étant inclinée en formant une contre-dépouille par rapport au plan du segment en forme de plaque.

14. Lame de scie circulaire selon l'une des revendications 1 à 13, caractérisée en ce que la surface de l'appendice saillant est essentiellement parallèle à la surface de la plaque et de préférence est située dans le même plan qu'une surface de la partie plus épaisse (1') de la plaque.

15. Lame de scie circulaire selon l'une des revendications 1 à 14, caractérisée en ce qu'elle comporte des logements en forme de fentes pour deux plaques interchangeables (1).

16. Lame de scie circulaire selon l'une des revendications 1 à 15, caractérisée en ce que les parois opposées (6,7) de la fente de logement (3) font entre elles un angle aigu.
